# EUROPÄISCHE PATENTSCHRIFT

(11) **EP 1 614 311 B1**
(45) Veröffentlichungstag und Bekanntmachung des Hinweises auf die Patenterteilung: **25.11.2009**
(21) Anmeldenummer: 04725702.7
(22) Anmeldetag: 05.04.2004
(51) Int. Cl.: H04W 24/00

(54) **VERFAHREN ZUM ERFASSEN UND AUSWERTEN DER GERÄTESPEZIFISCHEN DATEN EINES MOBILFUNKENDGERÄTS ZUM AUFFINDEN VON STÖRQUELLEN IN MOBILFUNKNETZEN**
METHOD FOR DETECTING AND EVALUATING THE DEVICE-SPECIFIC DATA OF A MOBILE RADIO TERMINAL FOR LOCALIZING SOURCES OF INTERFERENCE IN MOBILE RADIO NETWORKS
PROCEDE POUR DETECTER ET ANALYSER LES DONNEES SPECIFIQUES D'UN TERMINAL DE TELEPHONIE MOBILE AFIN DE LOCALISER DES SOURCES DE PARASITES DANS DES RESEAUX DE TELEPHONIE MOBILE

(30) Priorität: 15.04.2003 DE 10317411
(43) Veröffentlichungstag der Anmeldung: 11.01.2006
(73) Patentinhaber: Vodafone Holding GmbH, 40213 Düsseldorf (DE)
(72) Erfinder: KÖSTER, Paul, 40882 Mettmann (DE); KLEIER, Stephan, 40545 Düsseldorf (DE)
(74) Vertreter: Weisse, Renate
(86) Internationale Anmeldenummer: PCT/EP2004/003604
(87) Internationale Veröffentlichungsnummer: WO 2004/093478

(56) Entgegenhaltungen:
- EP-A- 0 685 972
- EP-A- 1 331 833
- US-B1- 6 275 692
- MOULY M ET AL: "NETWORK MANAGEMENT" GSM SYSTEM FOR MOBILE COMMUNICATIONS, LASSAY-LES-CHATEAUX, EUROPE MEDIA, FR, 1993, Seiten 566-647, XP000860009

## Beschreibung

### Technisches Gebiet

Die Erfindung betrifft ein Verfahren zum Erfassen und Zuordnen des Status von Mobilfunkendgeräten zur Auffindung von Störquellen, welche durch ein Mobilfunkendgerät in einem Mobilfunknetz ausgelöst werden, wobei eine computergesteuerte Zentraleinheit einen Datensatz der Teilnehmerkennung der letzten Kommunikation jeweils in einer Datenbank speichert.

### Stand der Technik

Technische Einrichtungen, wie Mobilfunknetze, weisen aufgrund ihrer Komplexität des Öfteren Störungen auf. Die Ursachen dieser Störungen sind dabei nur schwer auffindbar und meistens nur mit erheblichem technischem und zeitlichem Aufwand zu lokalisieren. Mobilfunknetze bestehen neben ihren Sende- und Verwaltungseinheiten aus Mobilfunkendgeräten. Während die Soft- und Hardware, wegen einer üblicherweise zentralen Verwaltung, für den Betreiber einfach auf dem technisch neuesten Stand zu halten ist, lassen sich die millionenfach vorkommenden Mobilfunkendgeräte nicht ohne weiteres auf dem neuesten Stand der Technik halten. Bei Änderung der Software des Betreibernetzes sind daher nicht selten Inkompatibilitäten zum Mobilfunkendgerät möglich. Solche Fehlerquellen lassen sich derzeit nur durch aufwendige Nachfrage bezüglich des Gerätetyps feststellen.

Michel Mouly et al, "The GSM System for Mobile Communications-Kapitel 9. Network Management" , Seiten 566-647*, beschreibt ein Verfahren zur Fehlererkennung bei Mobilfunkendgeräten. Dabei erfolgt die Störmeldung durch den Benutzer, der sich mit dem Mobilfunkanbieter in Verbindung setzt und seine Mobilfunkendgerätekennung (IMEI) mitteilt, die dann zur Behebung der Störung herangezogen werden kann. Die Störmeldung kann auch von dem Mobilfunknetz beim Mobilfunkendgerät im Bedarfsfall abgefragt werden. Darüber hinaus werden Verfahren zum Sperren eines Mobilfunkendgerätes beschrieben. Dabei werden gestörte Mobilfunkendgeräte in einer sog. "grauen Liste" geführt. Die "graue Liste" beinhaltet die IMEI des gestörten Mobilfunkendgerätes. Wartungssysteme können die "graue Liste" gemeinsam mit der Teilnehmerkennung (IMSI) des gestörten Mobilfunkendgerätes zur Überprüfung von Fehlern im System heranziehen.*

*Die* US-A-6 275 692 *beschreibt ein Verfahren, dass Benutzern von Mobilfunkendgeräten erlaubt, verschiedene Serviceleistungen der Mobilfunkanbieter in Abhängigkeit zu den Ressourcen seines Mobilfunkendgerätes zu erhalten. Dabei wird zur Identifizierung und zur Erkennung der funktionsfähigen Ressourcen des Mobilfunkendgerätes die Mobilfunkendgerätekennung (IMEI) an den Mobilfunkbetreiber übermittelt. Der Mobilfunkbetreiber ermittelt dann, ob die Ressourcen des Mobilfunkendgerätes ausreichen, die angebotenen Serviceleistungen zu benutzen. Verfahren zum Beseitigen von technischen Problemen bei Mobilfunkendgeräten ist in der* US-A-6 275 692 *nicht beschrieben.*

Sobald ein Mobilfunkteilnehmer derzeit einen Störfall meldet, wird zunächst das Funknetz in diesem lokalen Bereich überprüft. Dies lässt sich weitestgehend noch zentral mit geeigneten Prüfmitteln austesten. Bei der Kontrolle eines Mobilfunkendgerätes selbst kann wegen der Störung keine Überprüfung stattfinden. Hier muss der Bearbeiter des Störfalls entweder bei dem Mobilfunkendgerätenutzer oder Kundenbetreuer nach den relevanten Mobilfunkendgerätedaten nachfragen. Dieses Verfahren zur Feststellung des Mobilfunkendgeräts ist aufwendig und kostet nicht nur Zeit, sondern auch Geld.

### Offenbarung der Erfindung

Aufgabe der Erfindung ist es daher, die Nachteile des Standes der Technik zu beseitigen und insbesondere ein Verfahren zu schaffen, welches Fehlerquellen, deren Ursache im Mobilfunkendgerät liegen, schnell erfasst.

Erfindungsgemäß wird die Aufgabe dadurch gelöst, daß bei einem Verfahren zum Erfassen und Zuordnen des Status von Mobilfunkendgeräten zur Auffindung von Störquellen der eingangs genannten Art bei *jeder Kommunikation mit dem Mobilfunkendgerät* die Mobilfunkendgerätekennung zur Verknüpfung mit dem Datensatz der Teilnehmerkennung der letzten Kommunikation an die Zentraleinheit zur Auswertung übermittelt wird *und bei* Meldung einer Störung an die Zentraleinheit *zur Ausweitung der Störung die Teilnehmerkennung (MSISDN) der Gerätekennung (IMEI) des letzten funktionierenden verbindungsaufbaus zugeordnet wird.*

Die Erfindung beruht auf dem Prinzip, die gerätespezifischen Daten bei jeder Kommunikation mit dem Mobilfunkendgerät zu speichern und mit der Teilnehmerkennung zu verknüpfen. Ziel des erfindungsgemäßen Verfahrens ist es, insbesondere dem Bearbeiter eines Störfalls möglichst schnell alle erforderlichen Daten zur Beseitigung des Störfalls zur Verfügung zu stellen. Es liegen dem Bearbeiter des Störfalls somit die Teilnehmer- und Gerätedaten zumindest der letzten funktionierenden Kommunikation vor, die nun zur Beseitigung des Störfalls herangezogen werden können. Ein langwieriges Nach- oder Abfragen nach den gerätespezifischen Daten ist nunmehr nicht mehr notwendig.

In einer vorteilhaften Ausgestaltung des erfindungsgemäßen Verfahrens können anhand der Mobilfunkendgerätekennung technische Daten über das Mobilfunkendgerät aus einer Datenbank, welche in der computergesteuerten Zentraleinheit gespeichert sind, dem Mobilfunkendgerät zugeordnet werden. Auf diese Weise ist es dem Bearbeiter des Störfalls möglich, unmittelbar alle technischen Gegebenheiten, die das Mobilfunkendgerät betreffen, beispielsweise mit einem Personal-Computer (PC) abzurufen. Hierdurch lassen sich z.B. Inkompatibilitäten von verwendeter Hardware überprüfen und beseitigen.

In einer weiteren bevorzugten Ausbildung des erfindungsgemäßen Verfahrens zum Erfassen und Zuordnen des Status von Mobilfunkendgeräten kann die auf- dem Mobilfunkendgerät laufende Software ermittelt werden. Dadurch können somit Softwareprobleme erfasst und ggf. durch geeigneten Austausch der Software gelöst werden.

Es kann durchaus vorgekommen, dass die auf dem Mobilfunkendgerät laufende Software, beispielsweise durch einen Defekt, nicht ermittelbar ist. Dann ist es von Vorteil, wenn die auf dem Mobilfunkendgerät laufende Software zum Zeitpunkt der Auslieferung des Mobilfunkendgeräts ermittelt werden kann. Durch Feststellung des Identifikationscodes des Mobilfunkendgeräts lässt sich die ursprüngliche Software herausfinden.

In einer vorteilhaften Ausgestaltung des erfindungsgemäßen Verfahrens können einzelne Hardware-Komponenten des Mobilfunkendgeräts aus einer Datenbank ermittelt werden. Durch diese Maßnahme lassen sich auch fehlerhafte Bauelemente des Mobilfunkendgeräts erfassen, welche eine mögliche Ursache der Störung sein können.

In einer bevorzugten Ausgestaltung des erfindungsgemäßen Verfahrens werden gerätespezifische Daten mit jeder Kommunikationsverbindung an die Zentraleinheit zur Speicherung in der Datenbank übermittelt. Durch diese Maßnahme ist es möglich, die gerätespezifischen Daten zentral zu verwalten. Der Bearbeiter des Störfalls kann die Daten zentral und dadurch schneller abrufen.

Heitere Vorteile ergeben sich aus dem Gegenstand der Unteransprüche, sowie aus der Zeichnung mit der dazugehörigen Beschreibung.

### Kurze Beschreibung der Zeichnung

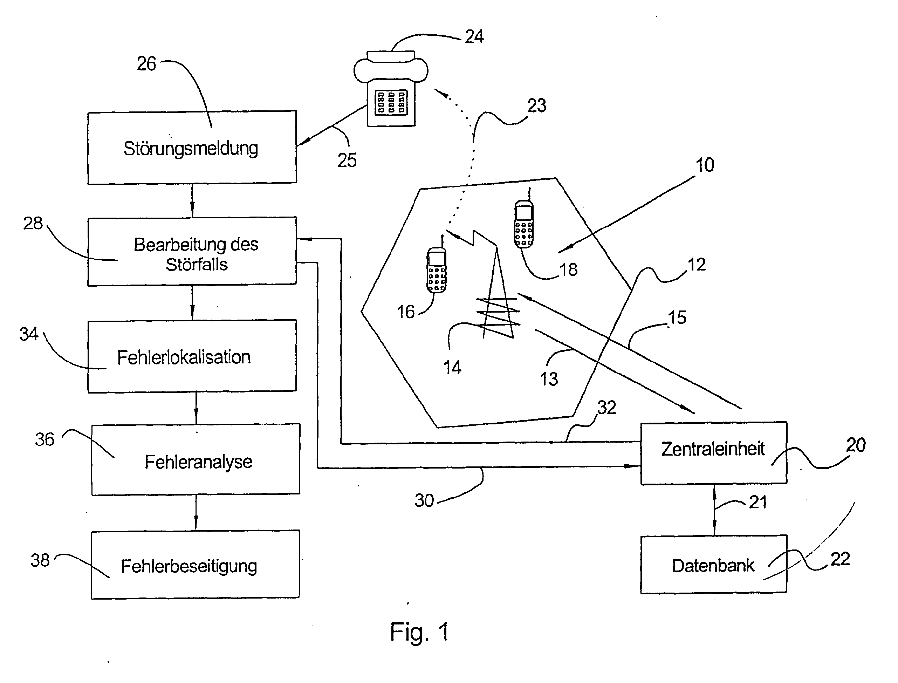

- Fig. 1: zeigt in einer Prinzipskizze ein Ausführungsbeispiel des erfindungsgemäßen Verfahrens.

### Bevorzugtes Ausführungsbeispiel

In Fig. 1 wird in einer schematischen Prinzipskizze das erfindungsgemäße Verfahren gezeigt. Mit 10 wird ein Mobilfunknetz bezeichnet. Das Mobilfunknetz 10 wird durch eine sechseckige Wabe 12 und einem Sendemast 14 symbolisiert. Das Mobilfunknetz 10 wird von Teilnehmern mit Mobilfunkendgeräten 16, 18 genutzt. Das Mobilfunknetz 10 wird von einer computergesteuerten Zentraleinheit 20 gesteuert und verwaltet. Über die Zentraleinheit 20 werden die Verbindungen zwischen zwei Kommunikationspartnern vermittelt. Die Zentraleinheit 20 kann dazu auf eine Datenbank 22 zugreifen, wo alle relevanten Daten gespeichert sind, Pfeil 21. Diese Datenbank 22 wird bei jedem Verbindungsaufbau mit einem der Mobilfunkendgeräte 16, 18 aktualisiert. Pfeile 13 und 15 symbolisieren den Datenaustausch zwischen den Mobilfunkendgeräten 16, 18 und der Zentraleinheit 20.

Bei jedem Verbindungsaufbau mit einem Mobilfunkendgerät 16, 18 wird immer sowohl die MSISDN, als auch die IMEI übermittelt. Die aktuellen Daten über die MSISDN und die IMEI werden in der Datenbank 22 abgeglichen. Mit MSISDN wird die Teilnehmerkennung bezeichnet und ist die Abkürzung für "Mobile Subscriber Integrated Services Digital Network". Die Teilnehmerkennung MSISDN ist geräteunabhängig und befindet sich üblicherweise in einem Speicherchip der SIM-Karte (= "Subscriber Identity Module"), welche für den Betrieb eines Mobilfunkendgeräts 16, 18 zur Teilnehmeridentifikation erforderlich ist.

Mit IMEI wird eine gerätespezifische elektronische Identifizierungsnummer von Mobilfunkendgeräten bezeichnet und ist die Abkürzung für "Internatonal Mobile Equipment Identity". Diese Nummer besteht aus einem Typencode und einer fortlaufenden herstellerabhängigen Fertigungsnummer. Anhand der IMEI kann sofort festgestellt werden, um was für einen Gerätetyp es sich bei dem Verbindungsaufbau handelt.

Im vorliegenden Ausführungsbeispiel stellt ein Teilnehmer fest, dass sein Mobilfunkendgerät 16 nicht funktioniert, was mit gestricheltem Pfeil 23 angedeutet wird. Er benachrichtigt daher über ein Telefon 24 aus dem Festnetz die Störungsstelle, symbolisiert durch Pfeil 25. Die Störungsmeldung 26 wird aufgenommen. Anschließen wird der Störungsfall durch einen Sachbearbeiter bearbeitet, was durch Kasten 28 angedeutet wird. Der Sachbearbeiter kann zur Bearbeitung des Störfalls über die Zentraleinheit 20 auf Datenbank 22 zurückgreifen, Pfeil 30. Darüber erhält er die Daten des letzten funktionierenden Kommunikationsaufbaus, Pfeil 32. Anhand der Teilnehmerkennung MSISDN kann der Sachbearbeiter auch den Typ des Mobilfunkendgeräts 16 identifizieren. In der Datenbank 22 wird nämlich der Teilnehmerkennung MSISDN die Gerätekennung IMEI des letzten funktionierenden Verbindungsaufbaus zugeordnet. Mittels dieser Daten kann der Bearbeiter schnell sehen, ob die Fehlfunktion an dem Gerätetyp des Mobilfunkendgeräts 16 liegt. Kasten 34 symbolisiert die Fehlerlokalisation. Natürlich kann der Fehler am Mobilfunknetz 10 selbst liegen, aber häufig stellen sich Inkompatibilitäten zwischen Soft- bzw. Hardware zwischen Mobilfunknetz 10 und Mobilfunkendgerät 16 als Ursache für die Störung heraus.

Die Analyse des Fehlers durch den Sachbearbeiter wird mit Kasten 36 angedeutet. Dabei kann er in Kenntnis der IMEI sämtliche technischen Hard- und Software-Details, wie z.B. Versionsnummern und verbaute Teile, bezüglich des Mobilfunkendgeräts 16 von der Datenbank 22 zur Fehleranalyse 36 abrufen. Ist der Fehler gefunden und analysiert, kann er beseitigt werden, was mit Kasten 38 angedeutet wird.

## Patentansprüche

1. Verfahren zum Erfassen und Zuordnen des Status von Mobilfunkendgeräten (16,18) zur Auffindung von Störquellen, welche durch ein Mobilfunkendgerät (16,18) in einem Mobilfunknetz ausgelöst werden, wobei eine computergesteuerte Zentraleinheit (20) einen Datensatz der Teilnehmerkennung MSISDN der letzten Kommunikation, jeweils in einer Datenbank (22) speichert, **dadurch gekennzeichnet, dass** *bei jeder Kommunikation mit dem Mobilfunkendgerät (16,* 18) die Mobilfunkendgerätekennung IMEI zur Verknüpfung mit dem Datensatz der Teilnehmerkennung MSISDN der letzten Kommunikation an die Zentraleinheit (20) zur Auswertung übermittelt wird *und* bei Meldung einer Störung (26) an die Zentraleinheit (20) *zur Auswertung der Störung die Teilnehmerkennung MSISDN der Gerätekennung IMEI des letzten funktionierenden Verbindungsaufbaus* zugeordnet wird *funktionierenden Verbindungsaufbaus zugeordnet wird.*

2. Verfahren zum Erfassen und Zuordnen des Status von Mobilfunkendgeräten (16,18) zur Auffindung von Störquellen nach Anspruch 1, **dadurch gekennzeichnet, dass** anhand der Mobilfunkendgerätekennung IMEI technische Daten über das Mobilfunkendgerät (16, 18) aus einer Datenbank (22), welche in der computergesteuerten Zentraleinheit (20) gespeichert sind, dem Mobilfunkendgerät (16, 18) zugeordnet werden.

3. Verfahren zum Erfassen und Zuordnen des Status von Mobilfunkendgeräten (16,18) zur Auffindung von Störquellen nach Anspruch 2, **dadurch gekennzeichnet, dass** die auf dem Mobilfunkendgerät (16, 18) laufende Software ermittelt wird.

4. Verfahren zum Erfassen und Zuordnen des Status von Mobilfunkendgeräten (16,18) zur Auffmdung von Störquellen nach Anspruch 2 oder 3, **dadurch gekennzeichnet, dass** die auf dem Mobilfunkendgerät (16, 18) bei Auslieferung laufende Software ermittelt wird.

5. Verfahren zum Erfassen und Zuordnen des Status von Mobilfunkendgeräten (16,18) zur Auffindung von Störquellen nach einem der Ansprüche 2 bis 4, **dadurch gekennzeichnet, dass** einzelne Hardware-Komponenten des Mobilfunkendgeräts (16,18) aus einer Datenbank (22) ermittelt werden.

6. Verfahren zum Erfassen und Zuordnen des Status von Mobilfunkendgeräten (16,18) zur Auffindung von Störquellen nach einem der Ansprüche 2 bis 5, **dadurch gekennzeichnet, dass** *gerätespezifische Daten* mit jeder Kommunikationsverbindung an die Zentraleinheit (20) zur Speicherung in der Datenbank (22) übermittelt *werden.*

## Claims

1. A method for detecting and allocating the status of mobile stations (16, 18) for localizing disturbing sources caused by a mobile station (16, 18) in a mobile communication network wherein a computer-controlled central unit (20) stores a dataset of the subscriber identification MSISDN of the last communication in a data base (22) respectively, **characterized in that** on each communication with the mobile station (16, 18) the mobile station identification IMEI is transmitted to the central unit (20) for concatenation to the dataset of the subscriber identification MSISDN of the last communication for evaluation and, on disturbance message (26) to the central unit (20), the subscriber identification MSISDN is allocated to the device identification IMEI of the last functioning connection establishment for evaluating the disturbance.

2. A method for detecting and allocating the status of mobile stations (16, 18) for localizing disturbing sources according to claim 1, **characterized in that** technical data of the mobile station (16, 18) from a data base (22) and stored in the computer-controlled central unit (20) is allocated to the mobile station (16, 18) by means of the mobile station identifier IMEI.

3. A method for detecting and allocating the status of mobile stations (16, 18) for localizing disturbing sources according to claim 2, **characterized in that** the software running on the mobile station (16, 18) is determined.

4. A method for detecting and allocating the status of mobile stations (16, 18) for localizing disturbing sources according to claim 2 or 3, **characterized in that** the software running on the mobile station (16, 18) when distributed is determined.

5. A method for detecting and allocating the status of mobile stations (16, 18) for localizing disturbing sources according any one of claims 2 to 4, **characterized in that** individual hardware components of the mobile station (16, 18) are determined form a data base (22).

6. A method for detecting and allocating the status of mobile stations (16, 18) for localizing disturbing sources according any one of claims 2 to 5, **characterized in that** device-specific data is transferred to the central unit (20) with each communication connection for storing in the data base (22).

## Revendications

1. Procédé de saisie et d'affectation du statut de terminaux de radiotéléphonie mobile (16, 18) destiné à détecter des sources d'interférence déclenchées dans un réseau de radiotéléphonie mobile par un terminal de radiotéléphonie mobile (16, 18), une unité centrale (20) commandée par ordinateur mémorisant à chaque fois dans une banque de données (22) un enregistrement de l'identification de l'usager MSISDN de la dernière communication, **caractérisé en ce que**, pour chaque communication avec le terminal de radiotéléphonie mobile (16, 18), l'identification du terminal de radiotéléphonie mobile IMEI pour la combinaison à l'enregistrement de l'identification de l'usager MSISDN de la dernière communication est transmise à l'unité centrale (20) pour être évaluée et, en cas d'avis d'interférence (26) envoyé à l'unité centrale (20), l'identification de l'usager MSISDN est affectée à l'identification de l'appareil IMEI de la dernière connexion ayant fonctionné pour évaluer l'interférence.

2. Procédé de saisie et d'affectation du statut de terminaux de radiotéléphonie mobile (16, 18) destiné à détecter des sources d'interférence selon la revendication 1, **caractérisé en ce que** l'identification du terminal de radiotéléphonie mobile IMEI permet d'affecter au terminal de radiotéléphonie mobile (16, 18) des données techniques issues d'une banque de données (22) et mémorisées dans l'unité centrale (20) commandée par ordinateur par l'intermédiaire du terminal de radiotéléphonie mobile (16, 18).

3. Procédé de saisie et d'affectation du statut de terminaux de radiotéléphonie mobile (16, 18) destiné à détecter des sources d'interférence selon la revendication 2, **caractérisé en ce que** le logiciel fonctionnant sur le terminal de radiotéléphonie mobile (16, 18) est déterminé.

4. Procédé de saisie et d'affectation du statut de terminaux de radiotéléphonie mobile (16, 18) destiné à détecter des sources d'interférence selon la revendication 2 ou 3, **caractérisé en ce que** le logiciel fonctionnant sur le terminal de radiotéléphonie mobile (16, 18) lors de la livraison est déterminé.

5. Procédé de saisie et d'affectation du statut de terminaux de radiotéléphonie mobile (16, 18) destiné à détecter des sources d'interférence selon l'une quelconque des revendications 2 à 4, **caractérisé en ce que** chacun des composants hardware du terminal de radiotéléphonie mobile (16, 18) est déterminé à partir d'une banque de données (22).

6. Procédé de saisie et d'affectation du statut de terminaux de radiotéléphonie mobile (16, 18) destiné à détecter des sources d'interférence selon l'une quelconque des revendications 2 à 5, **caractérisé en ce que** les données spécifiques à l'appareil sont transmises à chaque connexion à l'unité centrale (20) pour être sauvegardées dans la banque de données (22).
